# DEMANDE DE BREVET EUROPEEN

(11) **EP 1 980 941 A1**
(43) Date de publication de la demande: **15.10.2008**
(21) Numéro de dépôt: 08290352.7
(22) Date de dépôt: 10.04.2008
(51) Int. Cl.: G06F 9/44

(54) **Système de création automatisée d'une interface logicielle**

(30) Priorité: 10.04.2007 FR 0702615
(71) Demandeur: Continental Automotive France, 31100 Toulouse (FR)
(72) Inventeur: Grant, Mark, 06620 Le Bar Sur Loup (FR)
(74) Mandataire: Bloch, Gérard

(57) **Abrégé**

L'invention concerne un système de création automatisée d'une interface logicielle entre un opérateur et des coeurs fonctionnels d'appareils électroniques agencés dans une plateforme cible, le système comportant :
- un module de conception comprenant une fenêtre de conception, dans laquelle sont disposés des éléments visuels d'interface correspondant à des organes de commande de la plateforme, et une machine d'états dans laquelle les éléments sont connectés fonctionnellement ;
- un module de validation pour tester la cohérence des données issues du module de conception avec les propriétés des coeurs fonctionnels; et
- un module de simulation de la plateforme cible comprenant une unité de traduction convertissant les données issues du module de validation et les transmettant à un organe d'administration de la plateforme en vue de simuler les dits coeurs fonctionnels à l'aide des organes de commandes.

## Description

L'invention concerne le domaine des communications entre un individu et des appareils électroniques dans un véhicule. De manière classique, pour communiquer avec un appareil électronique, tel qu'un lecteur CD, un utilisateur manipule les organes de commande du lecteur, tels que des boutons, une molette ou une réglette, afin de lancer la lecture d'un CD ou changer de piste.

Cependant, la multiplication des appareils électroniques dans les véhicules de transport, et plus particulièrement dans les véhicules automobiles, nécessite de restreindre le nombre d'organes de commande sur la planche de bord. En effet, la surface de la planche de bord étant limitée, il n'est pas possible d'y placer les organes de commande de chacun des appareils.

Pour communiquer avec une nombre important d'appareils électroniques malgré un nombre restreint d'organes de commande, il est nécessaire de réaliser une interface logicielle entre lesdits organes et les coeurs fonctionnels des appareils disposés dans une plateforme. Pour fixer les idées et préciser ce que l'on entend par coeur, le coeur fonctionnel d'un lecteur CD peut comprendre par exemple une lentille de lecture, une tête laser et un moyen d'entraînement du CD en rotation. A l'aide de l'interface logicielle, les organes de commande peuvent être utilisés pour commander plusieurs coeurs fonctionnels.

La création d'une interface logicielle est un processus long et rigoureux qui comporte de nombreuses étapes.

De manière classique, un tel processus comporte une étape de « prototypage » théorique dans laquelle on schématise sur un calque, à l'aide de formes variées et colorées (disques, rectangles, etc.), les organes de commande nécessaires pour commander les coeurs fonctionnels des appareils. A titre d'exemple, pour un autoradio comprenant un récepteur radio, on définit sur un calque un rectangle représentant une zone d'affichage et un disque coloré représentant un bouton.

L'étape de prototypage est accompagnée d'une étape de rédaction de spécifications permettant de définir les relations entre les organes de commande et les coeurs fonctionnels des appareils. Ainsi, en reprenant l'exemple précédent, on prévoit dans les spécifications que lorsque le bouton est actionné, le récepteur radio est activé et transmet le nom de la station captée ainsi que le titre de la chanson à la zone d'affichage. Ces spécifications permettent de définir le cahier des charges de l'interface logicielle.

Dans une étape de codage, les spécifications sont traduites en un langage interprétable par les différents coeurs fonctionnels des appareils.

En règle général, les appareils électroniques peuvent interpréter un langage dit « bas-niveau » favorisant la vitesse d'exécution et le contrôle d'erreur, ce type de codage étant classiquement utilisé dans tous les systèmes embarqués. Ce langage s'oppose au langage dit « haut-niveau » utilisé pour la réalisation de prototypes favorisant le graphisme.

L'étape de codage s'appuie sur le document de spécifications et est réalisée de manière spécifique pour chacun des coeurs fonctionnels. C'est pourquoi, toujours en référence à l'exemple précédent, il est nécessaire de réaliser un codage individualisé pour un autoradio ayant un récepteur de radio hertzien et un autoradio ayant un récepteur de radio satellitaire. Le code généré est transféré à un module de gestion situé dans le véhicule, le module de gestion administrant de manière autonome la communication entre les organes de commande et les coeurs fonctionnels.

La création de l'interface logicielle s'achève par une étape de simulation pratique dans laquelle la communication entre les organes de commande et les coeurs fonctionnels est testée par un utilisateur manipulant lesdits organes.

Ce processus classique de création d'interface comporte de nombreux inconvénients.

Au cours de l'étape de codage, il arrive que le document de spécifications ne soit pas suivi à la lettre pour des raisons techniques, des fonctions ou des modes de représentation ne pouvant alors pas être codés.

En outre, il est courant que le graphisme des calques précédemment approuvés lors de la rédaction des spécifications ne convienne plus. Il est alors nécessaire de redéfinir un prototype, de modifier les spécifications et de coder de nouveau l'interface logicielle. La répétition des étapes de conception précédentes entraîne un allongement du cycle de conception.

De plus, des modifications matérielles des coeurs fonctionnels peuvent subvenir lors de la conception de l'interface. Ainsi, certaines fonctions sont enlevées ou ajoutées alors que les spécifications ont été approuvées, la création de l'interface logicielle devant alors être recommencée.

La création d'une interface logicielle, dite Interface Homme Machine, est un processus rigide et lent. Son manque de flexibilité impose de répéter certaines étapes de conception sans pour autant garantir le succès de la communication entre les organes de commande et les coeurs fonctionnels.

L'invention de la présente demande vise à pallier ces inconvénients. A cet effet, elle concerne un système de création automatisée d'une interface logicielle entre un opérateur et des coeurs fonctionnels d'appareils électroniques agencés dans une plateforme cible, le système comportant :
- un module de conception comprenant une fenêtre de conception, dans laquelle sont disposés des éléments visuels d'interface correspondant à des organes de commande de la plateforme, et une machine d'états dans laquelle les éléments visuels d'interface sont connectés fonctionnellement ;
- un module de validation pour tester la cohérence des données issues du module de conception avec les propriétés des coeurs fonctionnels; et
- un module de simulation de la plateforme cible comprenant une unité de traduction convertissant les données issues du module de validation et les transmettant à un organe d'administration de la plateforme en vue de simuler les dits coeurs fonctionnels à l'aide des organes de commandes.

Le système permet avantageusement de raccourcir le cycle de création d'une interface tout en permettant une flexibilité de la conception. Le système de création est universel et peut s'adapter à tout type d'appareils.

De préférence, le système comprend un module de simulation d'une plateforme d'appareils logicielle agencé pour simuler les données issues du module de validation sans être connecté aux coeurs fonctionnels des appareils électroniques.

Ainsi, on peut tester l'interface sans dépendre des appareils physiques, permettant ainsi de ne pas ralentir la création de l'interface en cas d'indisponibilité des appareils.

De préférence encore, l'interface est simulée au moyen d'un ordinateur relié au module de simulation d'une plateforme d'appareils logicielle.

De préférence toujours, des données issues des coeurs fonctionnels des appareils électroniques sont affichées sur un moniteur de l'ordinateur.

De préférence, les éléments visuels d'interface possèdent des attributs correspondant aux propriétés des coeurs fonctionnels des appareils électroniques.

Cela permet avantageusement d'assurer le portage de l'application sur la plateforme cible sans craindre d'incompatibilités entre les éléments visuels et les coeurs fonctionnels.

De préférence encore, la machine d'états comprend des blocs représentant les différents états possibles de l'interface, les blocs étant reliés par des liens représentant des moyens de transition entre les différents états.

De préférence toujours, l'unité de traduction du module de simulation cible est paramétrable en fonction des coeurs fonctionnels des appareils électroniques.

L'invention sera mieux comprise à l'aide de la description suivante et du dessin annexé sur lequel :
la figure 1 représente un schéma du système de création d'interface selon la présente invention ;
la figure 2 représente un schéma de la fenêtre de conception selon la présente invention;
la figure 3 représente un schéma du diagramme d'états selon la présente invention; et
la figure 4 représente une autre forme de réalisation du système de l'invention avec un module de simulation d'une plateforme d'appareils logicielle.

Un véhicule automobile peut comprendre plusieurs appareils électroniques de divertissement (lecteur de CD/DVD, récepteur radio) ou d'une utilisation directement liée à la conduite (récepteur GPS, détecteur de radar). Dans le cas d'un véhicule automobile comprenant uniquement un récepteur radio, on peut utiliser les organes de commande du récepteur radio pour commander ledit récepteur, les organes de commande comprenant des boutons poussoirs ou rotatifs ainsi que des réglettes mobiles.

Lorsqu'un véhicule comporte plusieurs de ces appareils, il n'est alors pas possible de disposer sur la planche de bord du véhicule automobile les organes de commande de tous les appareils.

Les différents appareils avec leurs organes de commande respectifs sont alors remplacés par une plateforme de divertissement regroupant les coeurs fonctionnels des différents appareils, le coeur fonctionnel d'un lecteur CD par exemple comprenant une lentille de lecture, une tête laser et un moyen d'entraînement du CD en rotation. Pour communiquer avec un nombre important d'appareils électroniques malgré un nombre restreint d'organes de commande, il est nécessaire de réaliser une interface logicielle entre lesdits organes et les coeurs fonctionnels des appareils.

Afin d'expliciter le système de création automatisée d'une telle interface logicielle, les différents modules qui le composent vont être détaillés en se référant, à titre d'exemple, à une plateforme de divertissement multimédia 300 pour véhicule automobile, comprenant les coeurs fonctionnels d'un récepteur radio 331, d'un lecteur CD 332 et d'une unité GPS 333.

La plateforme cible 300 comprend en outre des organes de commande 310 tels que des boutons poussoirs, des boutons rotatifs ainsi qu'un écran d'affichage à cristaux liquides (LCD) non représentés. La plateforme 300 comporte également un organe d'administration 320, qui peut-être un calculateur de bord, afin de traiter les différentes commandes reçues par un utilisateur 401 via les organes de commande 310, les commandes étant relayées vers les différents coeurs 331, 332, 333 par ledit organe 320.

Le système de création d'interface comprend un module de conception 200, présenté plus loin, permettant de mettre en relation de manière théorique les organes de commande 310 avec les coeurs fonctionnels 331, 332, 333. Le module de conception 200 est relié à un module de validation 210 agencé pour vérifier que les données fournies au module de conception 200 sont cohérentes avec les propriétés des coeurs fonctionnels 331, 332, 333. Par exemple, le module de validation 210 permet de vérifier que la taille de l'écran possède des dimensions compatibles avec une sortie vidéo de l'unité GPS 333.

Les données issues du module de validation 210 sont ensuite transmises à un module de simulation de la plateforme cible 230 comprenant une unité de traduction 231 qui convertit les données dans un langage interprétable par l'organe d'administration 320. L'interface logicielle de la plateforme 300 peut alors être simulée de manière autonome via les organes de commande 310. Dans cet exemple de mise en oeuvre, les modules 200, 210, 230 sont regroupés dans un ordinateur ou équivalent non représenté.

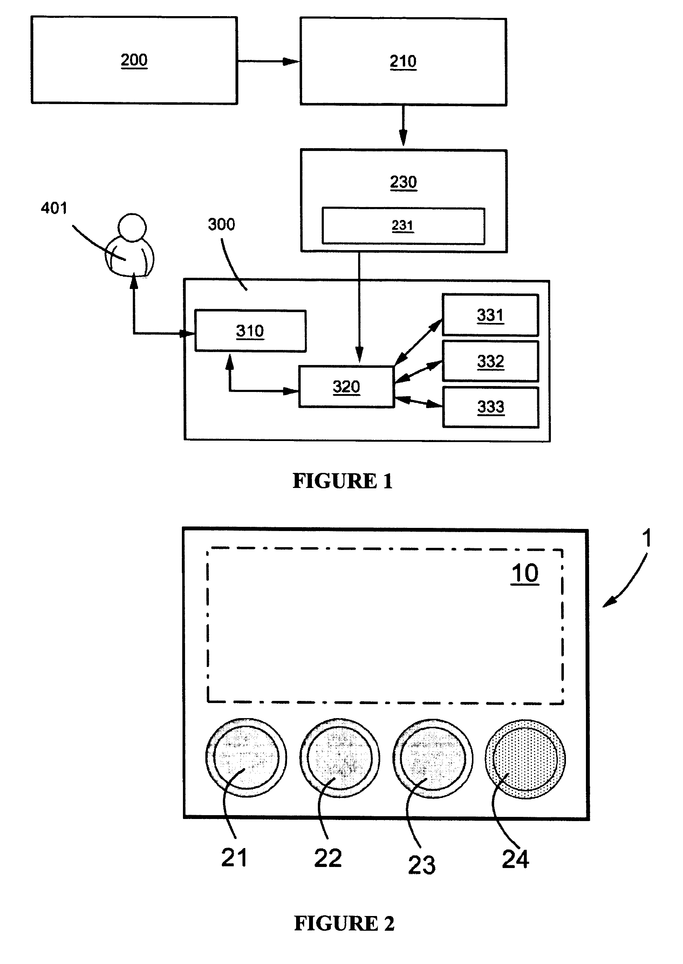

En référence à la figure 2, le module de conception 200 comporte une fenêtre de conception 1. Dans cette fenêtre 1 sont représentés des formes graphiques tels que des disques colorés - représentant des boutons poussoirs 21, 22, 23 et un bouton rotatif 24 - et un rectangle représentant un écran à cristaux liquides (LCD) 10 pour afficher divers caractères graphiques tels que du texte, des images ou des vidéos. Ces formes graphiques sont appelées éléments visuels d'interface 10, 21, 22, 23, 24.

Ces éléments visuels d'interface 10, 21, 22, 23, 24 possèdent des attributs fonctionnels correspondant aux propriétés fonctionnelles des coeurs des unités à interfacer. A titre d'exemple, le rectangle 10 possède ici comme attribut la résolution de l'écran, le nombre de couleurs pouvant être affichées et la fréquence de rafraîchissement. De manière similaire, les attributs pour un bouton rotatif sont le nombre de pas en rotation et le degré de la force anti-retour. Ainsi, pour deux plateformes de divertissement d'une même gamme, la première ayant un écran d'affichage du type LCD (Liquid Crystal Display)et la deuxième un écran d'affichage du type TFT (Thin-Film Transistor), la même fenêtre de conception 1 peut être utilisée avec les mêmes éléments visuels d'interface, seuls leurs attributs étant différents.

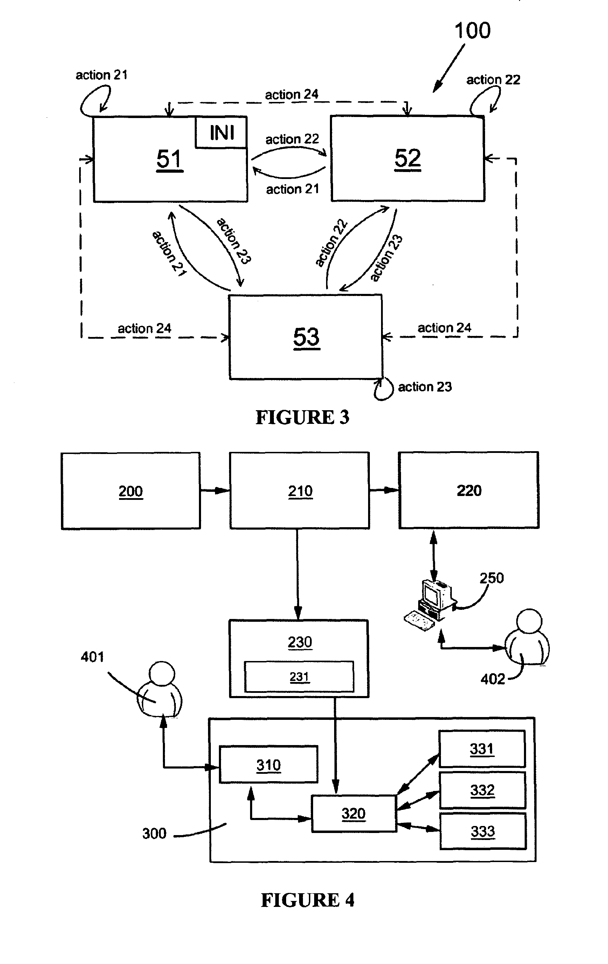

En référence à la figure 3, le module de conception 200 comprend en outre un diagramme ou machine d'états 100, permettant de définir les comportements logiques, séquentiels et fonctionnels des éléments visuels d'interface 10, 21, 22, 23, 24 disposés dans la fenêtre de conception 1. La machine 100 représente l'état des différents éléments visuels d'interface 10, 21, 22, 23, 24 lors de leur actionnement.

Les éléments visuels d'interface 21, 22, 23 activent respectivement le coeur du récepteur radio 331, le coeur du lecteur de CD audio 332 et le coeur de l'unité GPS 333, le bouton rotatif 24 permettant de permuter entre les différents coeurs fonctionnels.

La machine d'états 100 se présente sous la forme d'un ensemble de blocs 51, 52, 53 représentant les différents états de l'interface, les blocs 51, 52, 53 étant reliés les uns aux autres par des liens correspondant aux transitions entre les états.

L'état initial, lors de l'activation de l'interface, est indiqué sur la machine d'états 100 et est repéré par l'abréviation INI dans le bloc d'état 51.

Les blocs d'états 51, 52 et 53 correspondent ici respectivement à l'état actif des coeurs du récepteur radio 331, du lecteur de CD audio 332 et de l'unité GPS 333.

A l'état initial, la radio est activée. Si une action est exercée sur l'élément 22, correspondant au lecteur CD, la radio est désactivée tandis que le lecteur de CD audio est activé, le système étant alors dans l'état représenté par le bloc 52. De manière similaire, on passe dans l'état représenté par le bloc 53 en activant le bouton 23, l'unité GPS étant alors activée. Ainsi, les boutons 21, 22 et 23 permettent avantageusement de commuter entre les différentes fonctions de la plateforme 300.

De manière similaire, lorsque l'état du système est représenté par le bloc 51 (état radio), l'activation du bouton 21 (bouton radio) n'entraîne aucun changement d'état.

Le bouton rotatif 24 est utilisé pour commuter entre les différentes fonctions de la plateforme 300. Lorsque l'état du système est représenté par le bloc 51, il suffit d'entraîner le bouton 24 en rotation vers la gauche pour passer à la fonction GPS (état 53) et vers la droite pour passer à la fonction CD (état 52). Les flèches en tirets sur la figure 3 représentent les transitions entre les différents états lors d'une rotation du bouton rotatif 24.

Toutes ces actions entraînent des modifications de l'écran d'affichage 10, telles que l'affichage du nom de la station de radio, de l'artiste et de la chanson ainsi que la fréquence de réception.

Lorsqu'un élément visuel d'interface 10, 21, 22, 23, 24 est placé dans la fenêtre de conception 1, ce même élément pourra être placé simultanément dans le diagramme d'états 100, permettant ainsi d'accéder aux attributs de l'élément de manière rapide.

Les données qui ont été ajoutées dans le module de conception 200, aussi bien dans la fenêtre de conception 1 que dans le diagramme d'états 100, sont transmises au module de validation 210 pour être vérifiées.

Le module de validation 210 permet de s'assurer que les enchaînements logiques définis dans la machine d'états 100, ainsi que les éléments visuels 22, 23, 24 définis dans la fenêtre de conception 1, sont rentrés avec un format adéquat et sont conformes aux propriétés des coeurs fonctionnels des unités 331, 332, 333.

Cette étape de validation automatisée peut-être effectuée à n'importe quel moment de la conception de l'interface. Par exemple, il est possible de valider l'interface après l'insertion de chaque bouton 21, 22 et 23 dans la fenêtre de conception 1. Cette validation partielle permet de prévenir tout risque d'erreur et ainsi améliore la qualité de l'interface. Il en résulte ainsi un gain de temps sur l'ensemble du processus de création de l'interface.

Une fois les données du module de conception 200 validées par le module 210, les données sont transmises à un module de simulation de la plateforme cible 230, dit module de simulation cible 230, pour simuler l'interface à l'aide des organes de commande 310.

Le langage logiciel utilisé dans le module de conception 200 est différent de celui utilisé dans l'organe d'administration 320 de la plateforme 300. Ainsi, pour réaliser une simulation réelle, une unité de traduction 231 du module de simulation cible 230 permet de convertir les données de conception en un langage bas-niveau dit « cible » pouvant être interprété par l'organe d'administration 320 de la plateforme 300. Cette traduction est réalisée automatiquement ce qui procure un gain de temps.

De plus, l'unité de traduction 231 est paramétrable en fonction des coeurs fonctionnels 331, 332, 333 qu'elle comprend. Ainsi, pour une gamme de plateformes de divertissement pour véhicule automobile, il suffit de modifier le paramétrage de l'unité de traduction 231 pour adapter le code généré aux différentes plateformes de la gamme.

Lors du test réel, un utilisateur 401 peut actionner les organes de commande 310, observer le comportement des coeurs fonctionnels et déceler des défauts propres à l'implémentation sur la plateforme cible 300.

Dans une autre forme de réalisation de l'invention, il peut arriver que la plateforme 300 ou les coeurs fonctionnels 331, 332, 333 ne soient pas disponibles ou que l'on souhaite réaliser des tests sans dépendre de la plateforme physique 300 ni des organes de commande 310. Dans cette hypothèse, en référence à la figure 4, les données du module de conception 200 sont transmises à un module de simulation d'une plateforme d'appareils logicielle 220, dit module de simulation logicielle 220, qui simule l'interface créée au moyen d'un ordinateur 250 ou équivalent relié au module 220.

Un opérateur 402, a priori le même opérateur 401, teste l'interface à l'aide du module de simulation logicielle 220 en cliquant avec une souris de l'ordinateur sur le bouton 22 pour activer le lecteur de CD Audio, déclenchant ainsi l'affichage du texte « CD » dans le rectangle 10 de la fenêtre de conception 100 affichée sur le moniteur de l'ordinateur 250.

Ainsi, l'opérateur, qui peut-être un concepteur ou un client, peut apprécier la qualité de l'interface sans pour autant dépendre de la plateforme 300. C'est pourquoi, même si les coeurs de la plateforme 300 sont manquants, il est toujours possible de développer l'interface. De plus, cette interface « théorique» a été validée par le module de validation 220 ce qui assure la compatibilité future de l'interface avec la plateforme 300 et les coeurs non disponibles.

Quand ici on parle de boutons, de molettes, de réglettes ou autres manettes, on entend également couvrir tous les moyens d'actionnement des fonctions de l'appareil tels que des commandes sonores (par exemple vocales), des commandes visuelles (détection des mouvements de l'utilisateur), des commandes tactiles (écran tactiles) ainsi que toutes les commandes dites « sans-fil » (infrarouge, bluetooth, Wifi, onde radio, etc).

## Revendications

1. Système de création automatisée d'une interface logicielle entre un opérateur (401) et des coeurs fonctionnels d'appareils électroniques (331, 332, 333) agencés dans une plateforme cible (300), le système comportant :
- un module de conception (200) comprenant une fenêtre de conception (1), dans laquelle sont disposés des éléments visuels d'interface (10, 21, 22, 23, 24) correspondant à des organes (310) de commande de la plateforme (300), et une machine d'états (100) dans laquelle les éléments visuels d'interface (10, 21, 22, 23, 24) sont connectés fonctionnellement ;
- un module de validation (210) pour tester la cohérence des données issues du module de conception (200) avec les propriétés des coeurs fonctionnels (331, 332, 333); et
- un module (230) de simulation de la plateforme cible (300) comprenant une unité de traduction (231) convertissant les données issues du module de validation (210) et les transmettant à un organe d'administration (320) de la plateforme cible (300) en vue de simuler les dits coeurs fonctionnels (331, 332, 333) à l'aide des organes de commande (310).

2. Système de création automatisée d'une interface logicielle selon la revendication 1, comprenant un module de simulation d'une plateforme d'appareils logicielle (220) agencé pour simuler les données issues du module de validation (210) sans être connecté aux coeurs fonctionnels des appareils électroniques (331, 332, 333).

3. Système de création automatisée d'une interface logicielle selon la revendication 2, dans lequel l'interface est simulée au moyen d'un ordinateur (250) relié au module de simulation d'une plateforme d'appareils logicielle (220).

4. Système de création automatisée d'une interface logicielle selon la revendication 3, dans lequel des données issues des coeurs fonctionnels des appareils électroniques (331, 332, 333) sont affichées sur un moniteur de l'ordinateur (250).

5. Système de création automatisée d'une interface logicielle selon l'une des revendications 1 à 4, dans lequel les éléments visuels d'interface (10, 21, 22, 23, 24) possèdent des attributs correspondants aux propriétés des coeurs fonctionnels des appareils électroniques (331, 332, 333).

6. Système de création automatisée d'une interface logicielle selon l'une des revendications 1 à 5, dans lequel la machine d'états (100) comprend des blocs (51, 52, 53) représentant les différents états possibles de l'interface, les blocs (51, 52, 53) étant reliés par des liens représentant des moyens de transition entre les différents états.

7. Système de création automatisée d'une interface logicielle selon l'une des revendications 1 à 6, dans lequel l'unité de traduction (231) est paramétrable en fonction des coeurs fonctionnels des appareils électroniques (331, 332, 333).
